# EUROPEAN PATENT APPLICATION

(11) **EP 4 733 096 A1**
(43) Date of publication of application: **29.04.2026**
(21) Application number: 25211031.7
(22) Date of filing: 24.10.2025
(51) Int. Cl.: B60H 1/00, B60H 1/14

(54) **METHOD FOR CONTROLLING HEATING AND HVAC SYSTEM THEREOF**

(30) Priority: 25.10.2024 KR 20240147614
(71) Applicant: SK Innovation Co., Ltd., Seoul 03188 (KR); SK On Co., Ltd., Seoul 03161 (KR)
(72) Inventor: LEE, Su Jin, 34124 Daejeon (KR); NOH, Ji Seong, 34124 Daejeon (KR)
(74) Representative: Prüfer & Partner mbB Patentanwälte · Rechtsanwälte

(57) **Abstract**

Disclosed are a method for controlling heating of an HVAC system for an electric vehicle and an HVAC system thereof. According to various embodiments, in an operation of the HVAC system including a main heating unit (141) in which a first refrigerant circulates and an auxiliary heating unit (143) in which a second refrigerant circulates, at least one of the first refrigerant and the second refrigerant may comprise at least one of: a natural refrigerant; a hydrofluorocarbon (HFC)-based refrigerant; a hydrofluoroolefin (HFO)-based refrigerant; a hydrochlorofluorocarbon (HCFC)-based refrigerant; a hydrocarbon-based refrigerant that is not a natural refrigerant; and a halon or a perfluorocarbon (PFC)-based refrigerant. Further disclosed is the use of a HVAC system as disclosed herein in an electric vehicle. Further provided is an electric vehicle, comprising the HVAC system as disclosed herein.

## Description

### Technical Field

The present disclosure relates generally to a heating control for an electric vehicle, and more particularly, to a method for controlling heating and an HVAC system thereof. The present disclosure further relates to the use of a HVAC system in an electric vehicle, and to an electric vehicle comprising said HVAC system.

### Background

An automotive heating, ventilation, and air conditioning (HVAC) system is generally configured to heat and cool the air within a passenger cabin to ensure occupant comfort. Such systems may be configured to selectively switch between air sources, such as fresh outside air and recirculated cabin air. Some systems draw in a mixture of this outside and inside air, condition it, and then supply the conditioned air into the cabin.

The automotive HVAC system includes a condenser and a heat core disposed within an HVAC casing. The HVAC casing has an inlet through which air is introduced and a plurality of outlets for discharging the air into the passenger cabin. For cooling the cabin temperature, the condenser exchanges heat with air blown by a cooling fan to introduce the cooled air into the passenger cabin. For heating the cabin temperature, the heat core may exchange heat with air provided by a blower fan to introduce the heated air into the passenger cabin.

In an electric vehicle, since most of the heating or cooling of the HVAC system must rely on battery power, operating the heating or cooling system causes a sharp increase in battery consumption. This may lead to a degradation in the performance of the electric vehicle or a reduction in the expected driving range.

In particular, if there is a large temperature difference from the present temperature to a target temperature when starting the vehicle, the heating or cooling system consumes more battery power to quickly reach the target temperature. This increases initial battery consumption, which shortens the drivable range and leads to more frequent charging cycles, thereby causing inconvenience to the driver.
Thus, in order to solve one or optionally more, or even all, of these problems, it is an object of the present invention to provide an improved method for controlling heating, ventilation, and/or air conditioning, preferably for controlling heating, of an HVAC system for an electric vehicle. It is further an object of the present invention to provide an improved HVAC system for controlling heating, ventilation, and/or air conditioning, preferably for controlling heating, suitable for an electric vehicle, as well as to provide an electric vehicle comprising said improved HVAC system. By this improved method and improved HVAC system, it is respectively possible to control heating and/or cooling of the interior of a vehicle.

### SUMMARY

Embodiments of the present disclosure may provide a method for controlling heating based on heat generated during charging of an electric vehicle, and an HVAC system for implementing the same. Problems to be solved through various embodiments are not limited to the above-described problems, and other problems not described above will be clearly understood by those skilled in the art from the following description.

According to an aspect of the present disclosure, there is provided a method for controlling heating of an HVAC system for an electric vehicle, wherein the HVAC system comprises a main heating unit in which a first refrigerant circulates and an auxiliary heating unit in which a second refrigerant circulates, and wherein at least one of the first refrigerant and the second refrigerant comprises at least one selected from the group consisting of: a natural refrigerant; a hydrofluorocarbon (HFC)-based refrigerant which, preferably, is a saturated hydrofluorocarbon (HFC)-based refrigerant; a hydrofluoroolefin (HFO)-based refrigerant; a hydrochlorofluorocarbon (HCFC)-based refrigerant; a hydrocarbon-based refrigerant that is not a natural refrigerant; and a halon or a perfluorocarbon (PFC)-based refrigerant.

In some non-limiting embodiments, the natural refrigerant may include at least one selected from the group consisting of: methane (R-50), ammonia (R-717), carbon dioxide (R-744), ethane (R-170), and propane (R-290).

In some non-limiting embodiments, the hydrofluorocarbon (HFC)-based refrigerant is preferably a saturated hydrofluorocarbon (HFC)-based refrigerant and preferably may include at least one selected from the group consisting of: difluoromethane (R-32), 1,1-difluoroethane (R-152a), pentafluoroethane (R-125), 1,1,1,2-tetrafluoroethane (R-134a), 1,1,1-trifluoroethane (R-143a), trifluoromethane (R-23), fluoroethane (R-161), 1,1,1,2,3,3,3-heptafluoropropane (R-227ea), 1,1,1,2,3,3-hexafluoropropane (R-236ea), 1,1,1,3,3,3-hexafluoropropane (R-236fa), 1,1,1,3,3-pentafluoropropane (R-245fa), and 1,1,1,3,3-pentafluorobutane (R-365mfc).

In some non-limiting embodiments, the hydrofluoroolefin (HFO)-based refrigerant may include at least one selected from the group consisting of: 1,1,2-trifluoroethylene (R-1123), 1-chloro-2,3,3,3-tetrafluoropropene (R1224yd(Z)), 2,3,3,3-tetrafluoropropene (R-1234yf), 1,3,3,3-tetrafluoropropene (R-1234ze), 1,2,3,3-tetrafluoropropene (R-1234ye), 3,3,3-trifluoropropene (R-1243zf), 1,1-difluoroethylene (R-1132a), and 1,2,3,3,3-pentafluoropropene (R-1225ye).

In some non-limiting embodiments, the hydrochlorofluorocarbon (HCFC)-based refrigerant may include at least one selected from the group consisting of: chlorodifluoromethane (R-22), chlorotetrafluoroethane (R-124), and 1-chloro-1,1-difluoroethane (R-142b).

In some non-limiting embodiments, the hydrocarbon-based refrigerant that is not a natural refrigerant may include at least one selected from the group consisting of: propylene (R-1270), isobutane (R-600a), dimethyl ether, isopentane, and pentane.

In some non-limiting embodiments, the halon or the perfluorocarbon (PFC)-based refrigerant may include at least one selected from the group consisting of: trifluoroiodomethane (R-13I1), octafluoropropane (R-218), and octafluorocyclobutane (RC318).

In some non-limiting embodiments, the method may comprise: heating the second refrigerant using heat generated from a battery of the electric vehicle during charging of the battery; circulating the first refrigerant and the second refrigerant when an operation of a heating mode is determined according to a user input after the electric vehicle is started; and based on a temperature of the first refrigerant, supplying, into a cabin of the electric vehicle, air heated using the first refrigerant or supplying, into the cabin of the electric vehicle, air heated using the second refrigerant. The expression "circulating the first refrigerant and the second refrigerant" is also referred to herein as "the operation of circulating of the first refrigerant and the second refrigerant".

In some non-limiting embodiments, the operation of circulating the first refrigerant and the second refrigerant may further comprise: heating the second refrigerant using an electronic heating element when a temperature of the second refrigerant is equal to or less than a first preset temperature.

In some non-limiting embodiments, the operation of supplying, into a cabin of the electric vehicle, one of air heated using the first refrigerant and air heated using the second refrigerant may comprise: when a temperature of the first refrigerant is equal to or less than a second temperature, supplying, into the cabin, air that has passed through a heat exchanger of the auxiliary heating unit; or when the temperature of the first refrigerant is greater than the second temperature, stopping an operation of the auxiliary heating unit and supplying, into the cabin, air that has passed through a heat core of the main heating unit. The expression "supplying, into a cabin of the electric vehicle, air heated using the first refrigerant or supplying, into the cabin of the electric vehicle, air heated using the second refrigerant" is also referred to herein as "the operation of supplying, into a cabin of the electric vehicle, one of air heated using the first refrigerant and air heated using the second refrigerant".

According to another aspect of the present disclosure, there is provided an HVAC system for controlling heating for an electric vehicle, the HVAC system including: a main heating unit in which a first refrigerant circulates; and an auxiliary heating unit in which a second refrigerant circulates, wherein the main heating unit includes: a compressor configured to compress the first refrigerant; a heat core configured to exchange heat with the first refrigerant; and a first piping configured to circulate the first refrigerant through the compressor and the heat core, wherein the auxiliary heating unit includes: a heating tank configured to store the second refrigerant; a pump configured to move the second refrigerant; a heat exchanger configured to exchange heat with the second refrigerant; and a second piping configured to circulate the second refrigerant through the heating tank, the pump, and the heat exchanger, and wherein at least one of the first refrigerant and the second refrigerant includes at least one selected from the group consisting of: a natural refrigerant; a hydrofluorocarbon (HFC)-based refrigerant, which, preferably, is a saturated hydrofluorocarbon (HFC)-based refrigerant; a hydrofluoroolefin (HFO)-based refrigerant; a hydrochlorofluorocarbon (HCFC)-based refrigerant; a hydrocarbon-based refrigerant that is not a natural refrigerant; and a halon or a perfluorocarbon (PFC)-based refrigerant.

In some non-limiting embodiments, the natural refrigerant may include at least one selected from the group consisting of: methane (R-50), ammonia (R-717), carbon dioxide (R-744), ethane (R-170), and propane (R-290).

In some non-limiting embodiments, the hydrofluorocarbon (HFC)-based refrigerant is preferably a saturated hydrofluorocarbon (HFC)-based refrigerant and preferably may include at least one selected from the group consisting of: difluoromethane (R-32), 1,1-difluoroethane (R-152a), pentafluoroethane (R-125), 1,1,1,2-tetrafluoroethane (R-134a), 1,1,1-trifluoroethane (R-143a), trifluoromethane (R-23), fluoroethane (R-161), 1,1,1,2,3,3,3-heptafluoropropane (R-227ea), 1,1,1,2,3,3-hexafluoropropane (R-236ea), 1,1,1,3,3,3-hexafluoropropane (R-236fa), 1,1,1,3,3-pentafluoropropane (R-245fa), and 1,1,1,3,3-pentafluorobutane (R-365mfc).

In some non-limiting embodiments, the hydrofluoroolefin (HFO)-based refrigerant may include at least one selected from the group consisting of: 1,1,2-trifluoroethylene (R-1123), 1-chloro-2,3,3,3-tetrafluoropropene (R1224yd(Z)), 2,3,3,3-tetrafluoropropene (R-1234yf), 1,3,3,3-tetrafluoropropene (R-1234ze), 1,2,3,3-tetrafluoropropene (R-1234ye), 3,3,3-trifluoropropene (R-1243zf), 1,1-difluoroethylene (R-1132a), and 1,2,3,3,3-pentafluoropropene (R-1225ye).

In some non-limiting embodiments, the hydrochlorofluorocarbon (HCFC)-based refrigerant may include at least one selected from the group consisting of: chlorodifluoromethane (R-22), chlorotetrafluoroethane (R-124), and 1-chloro-1,1-difluoroethane (R-142b).

In some non-limiting embodiments, the hydrocarbon-based refrigerant that is not a natural refrigerant may include at least one selected from the group consisting of: propylene (R-1270), isobutane (R-600a), dimethyl ether, isopentane, and pentane.

In some non-limiting embodiments, the halon or the perfluorocarbon (PFC)-based refrigerant may include at least one selected from the group consisting of: trifluoroiodomethane (R-13I1), octafluoropropane (R-218), and octafluorocyclobutane (RC318).

In some non-limiting embodiments, the HVAC system may further include: a battery; a waste heat exchanger configured to transfer heat between the battery and the heating tank; and a processor configured to: heat the second refrigerant using heat generated from the battery during charging of the battery; circulate the first refrigerant and the second refrigerant when an operation of a heating mode is determined according to a user input after the electric vehicle is started; and based on a temperature of the first refrigerant, control the HVAC system to supply, into a cabin of the electric vehicle, air heated using the first refrigerant or to supply, into the cabin of the electric vehicle, air heated using the second refrigerant.

In some non-limiting embodiments, the processor may be further configured to: heat the second refrigerant using an electronic heating element when a temperature of the second refrigerant is equal to or less than a first preset temperature.

In some non-limiting embodiments, the processor may be further configured to: when a temperature of the first refrigerant is equal to or less than a second temperature, supply, into the cabin, air that has passed through a heat exchanger of the auxiliary heating unit, or when the temperature of the first refrigerant is greater than the second temperature, stop an operation of the auxiliary heating unit and supply, into the cabin, air that has passed through a heat core of the main heating unit.

Another aspect of the present disclosure refers to the use of a HVAC system as disclosed herein in an electric vehicle.

According to another aspect of the present disclosure, there is provided an electric vehicle, comprising the HVAC system as disclosed herein.

In some non-limiting embodiments, by utilizing waste heat generated during battery charging for cabin heating, the disclosed heating control method and HVAC system thereof allow vehicle heating to be performed without consuming additional energy (e.g., battery power) at the initial start-up of the vehicle, thereby improving the vehicle's energy efficiency.

In some non-limiting embodiments, by utilizing the waste heat generated during battery charging for cabin heating, the disclosed heating control method and HVAC system thereof can heat the vehicle cabin quickly. Therefore, a comfortable environment can be provided to passengers in a shorter amount of time.

### BRIEF DESCRIPTION OF THE DRAWINGS

The above and other objects, features and other advantages of the embodiments of the present disclosure will be more clearly understood from the following detailed description taken in conjunction with the accompanying drawings, in which:
FIG. 1 is a block diagram schematically illustrating components for controlling heating of an HVAC system, according to some non-limiting embodiments of the present disclosure.
FIG. 2 is a diagram schematically illustrating a configuration of a heating unit for controlling heating in an HVAC system and a flow of air passing through the heating unit, according to some non-limiting embodiments of the present disclosure.
FIG. 3 is a diagram illustrating a detailed configuration of a heating unit for controlling heating in an HVAC system and an operation of the heating unit based thereon, according to some non-limiting embodiments of the present disclosure.
FIG. 4 is a flowchart illustrating a flow of operations for performing heating control of a vehicle in an HVAC system, according to some non-limiting embodiments of the present disclosure.
FIG. 5 is a flowchart illustrating a detailed flow of operations for performing heating control of a vehicle in an HVAC system, according to some non-limiting embodiments of the present disclosure.

### DETAILED DESCRIPTION

Hereinafter, embodiments of the present disclosure will be described in detail with reference to the accompanying drawings. However, since various changes may be made in the embodiments, the scope of the present disclosure is not limited or restricted by these embodiments. It should be understood that all modifications, equivalents, and alternatives for the embodiments are included in the scope of the present disclosure. For example, it is to be understood that the embodiments of the present disclosure include various alternative variations and step sequences, except where expressly specified to the contrary. It is also to be understood that the specific devices and processes illustrated in the attached drawings, and described in the following detailed description, are simply illustrative and describe non-limiting embodiments of the disclosed subject matter. Hence, specific dimensions and other physical characteristics related to the embodiments disclosed herein are not to be considered as limiting.

No aspect, component, element, structure, act, step, function, instruction, and/or the like used herein should be construed as critical or essential unless explicitly described as such. Also, as used herein, the articles "a" and "an" are intended to include one or more items and may be used interchangeably with "one or more" and "at least one." Furthermore, as used herein, the term "set" is intended to include one or more items (e.g., related items, unrelated items, a combination of related and unrelated items, and/or the like) and may be used interchangeably with "one or more" or "at least one." Where only one item is intended, the term "one" or similar language is used. Also, as used herein, the terms "comprise", "comprises", "comprising", "include", "includes", "including", "has," "have," "having," or the like are intended to be openended terms. Further, the phrase "based on" is intended to mean "based at least partially on" unless explicitly stated otherwise. In addition, reference to an action being "based on" a condition may refer to the action being "in response to" the condition. For example, the phrases "based on" and "in response to" may, in some non-limiting embodiments, refer to a condition for automatically triggering an action (e.g., a specific operation of an electronic device, such as a computing device, a processor, and/or the like).

It will be understood that when a component is described to as being "connected," "combined" or "coupled" to another component, the component may be directly connected or coupled to the another component, or it may be "connected," "combined" or "coupled" to the other component by an intervening other component that may be present.

Further, in describing the components of the embodiment, the meaning of "or" may mean each of the components, may mean two or more of the components, or may mean all of the components. For example, it should be understood that the expressions "a, b or c" represent any one of "a," "b," "c," "a and b," "a and c," "b and c," and "a, b and c."

Components comprised in one embodiment and components comprising common functions will be described using the same names in other embodiments. The description given in one embodiment may be applied to other embodiments, and therefore will not be described in detail within the overlapping range, unless there is a description opposite thereto.

The device and/or 'data' processed by the device may be expressed in terms of 'information". Here, the information may be used as a concept comprising the data.

The present disclosure may describe a method for controlling heating for an electric vehicle and an HVAC system thereof. Herein, an electric vehicle, which drives its wheels using a motor, may include an automobile that drives its wheels based on electric power stored in a rechargeable battery, such as a lithium-ion battery. Furthermore, the electric vehicle may also include a hybrid vehicle that drives its wheels using both a motor and an internal combustion engine.

Some non-limiting embodiments of the present disclosure may describe a method and a system thereof for controlling a cabin temperature by supplying warm air into a cabin (e.g., a passenger cabin) of an electric vehicle (hereinafter, "vehicle") for heating. However, without being limited thereto, the heating control method and system may also be applied to cabin heating of an internal combustion engine vehicle.

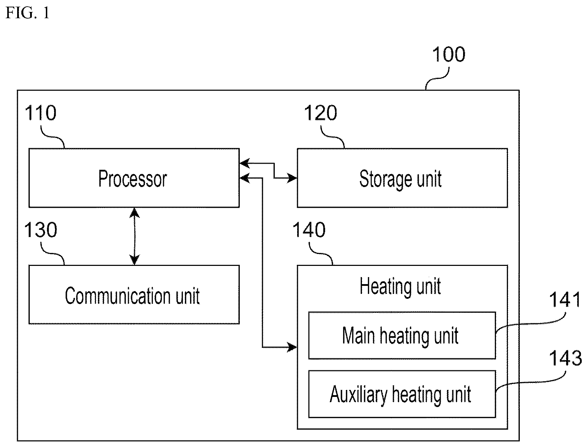

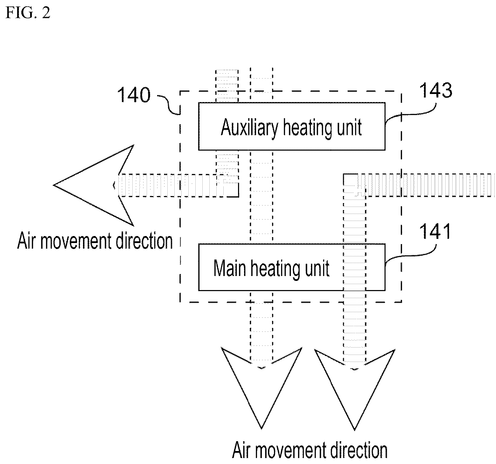

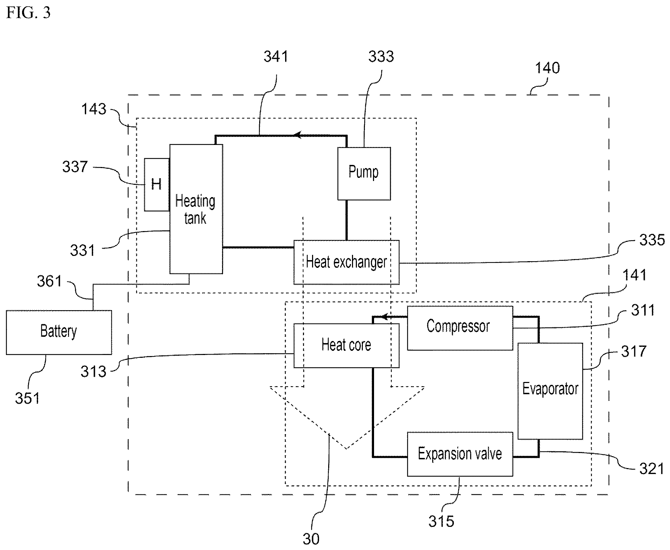

In this regard, FIG. 1 schematically illustrates components for controlling heating of an HVAC system, according to some non-limiting embodiments of the present disclosure. FIG. 2 schematically illustrates a configuration of a heating unit for controlling heating in the HVAC system and a flow of air passing through the heating unit, according to some non-limiting embodiments of the present disclosure. FIG. 3 illustrates a detailed configuration of the heating unit for controlling heating in the HVAC system and an operation of the heating unit based thereon, according to some non-limiting embodiments of the present disclosure.

First, referring to FIG. 1, an HVAC system 100 according to some non-limiting embodiments of the present disclosure may be configured as a system for heating, ventilation, and air conditioning (HVAC) control related to heating or cooling the interior of a vehicle.

Referring to FIG. 1, the HVAC system 100 includes a heating unit 140 as a system for controlling vehicle heating, and may further be configured to include a cooling unit (not shown) as a system for controlling vehicle cooling.

More specifically, the HVAC system 100 may be configured to include a heating unit 140 for performing vehicle cabin heating, a processor 110 for controlling an operation of the heating unit 140, a storage unit 120 for storing data for an operation of the processor 110, and a communication unit 130 for enabling communication of the HVAC system 100.

The processor 110 may include at least one processor and may process various data for the operation of the HVAC system 100 through at least one program (e.g., an application, a tool, a plug-in, software, etc.).

The processor 110 may control operations or functions of components included in or connected to the HVAC system 100 (e.g., the storage unit 120, the communication unit 130, the heating unit 140, etc.), and for this purpose, may transmit data to and receive data from the components via the communication unit 130.

The storage unit 120 may be configured to include volatile memory, non-volatile memory, or other such computer-readable recording media. The computer-readable recording medium may store a computer program for causing the HVAC system 100 to perform operations according to some non-limiting embodiments.

For example, the storage unit 120 may store various data that is transmitted to, received from, or processed by at least one component of the HVAC system 100 (e.g., the processor 110, the communication unit 130, etc.). The data may include, for example, a program for processing control commands, data processed by the program, or related input and output data.

According to some non-limiting embodiments, the storage unit 120 may store at least one program for controlling the operation of the heating unit 140.

Additionally, the storage unit 120 may include an artificial intelligence algorithm for processing control commands, the algorithm being based on at least some of: an artificial neural network algorithm, a blockchain algorithm, a deep learning algorithm, and a regression analysis algorithm, and mechanisms related thereto; operators; language models; and big data.

The communication unit 130 establishes a wired or wireless communication channel between internal components of the HVAC system 100, and/or between the HVAC system 100 and at least one other device (e.g., a user device or a server), and may support communication through the established communication channel.

The heating unit 140 includes a structure for heating the vehicle cabin. As illustrated in FIGS. 1, 2, and 3, the heating unit 140 may be configured to include a main heating unit 141 and an auxiliary heating unit 143.

More specifically, the main heating unit 141 may be configured to include a compressor 311, a heat core 313 operating as an internal heat exchanger, an expansion valve 315, and an evaporator 317 operating as an external heat exchanger.

In addition, the main heating unit 141 may be configured to include a refrigerant circulation pipe (first piping) 321 that connects the compressor 311, the heat core 313, and the evaporator 317, and a refrigerant (first refrigerant) that flows inside the first piping 321.

The compressor 311 may compress the first refrigerant and discharge the compressed first refrigerant to flow toward the heat core 313. Based on this, the first refrigerant discharged from the compressor 311 may pass through the heat core 313 and the evaporator 317, and then return to the compressor 311 to be circulated.

More specifically, the compressor 311 may convert a low-temperature, low-pressure gaseous refrigerant into a high-temperature, high-pressure gaseous refrigerant by increasing its pressure (or compressing it) and supply it to the heat core 313.

The heat core 313 may be configured to condense the high-temperature, high-pressure gaseous refrigerant into a high-temperature, high-pressure liquid refrigerant by releasing heat. Here, the heat core 313 is configured to allow air to pass through and perform heat exchange, and the air passing through the heat core 313 may be heated based on the heat released from the refrigerant.

The high-temperature, high-pressure liquid refrigerant that has passed through the heat core 313 may be supplied to the expansion valve.

The expansion valve 315 may reduce the pressure of (or expand) the high-temperature, high-pressure liquid refrigerant to convert it into a low-temperature, low-pressure liquid refrigerant and supply it to the evaporator 317.

The evaporator 317 may exchange heat with the low-temperature, low-pressure liquid refrigerant to convert it into a low-temperature, low-pressure gaseous refrigerant. The low-temperature, low-pressure gaseous refrigerant may be supplied back to the compressor 311, allowing the first refrigerant to circulate inside the first piping 321.

Furthermore, the main heating unit 141 may be configured to include at least one blower fan (not shown) that operates to make the cabin air of the vehicle pass through the heat core 313. Here, the blower fan may be located at a front end (e.g., an air inlet) or a rear end (e.g., an air outlet) of the heat core 313 and configured to control the flow of air passing through the heat core 313.

In addition, the main heating unit 141 may be configured with a passage (e.g., a duct) such that air inside the vehicle passes through the heat core 313 and is introduced into the vehicle cabin.

Moreover, the main heating unit 141 may be configured with at least one first temperature sensor for measuring a temperature of the first refrigerant entering the heat core 313 through the first piping 321.

More specifically, the first temperature sensor may be attached to a surface of the first piping 321 within a preset distance (first distance) from an inlet of the heat core 313.

However, the first temperature sensor may also be configured by forming a hole (e.g., drilling) in the surface of the first piping 321 within the preset distance, and then arranging (or inserting) the first temperature sensor toward an interior of the first piping 321 and sealing it.

The auxiliary heating unit 143 may be configured to include a heating tank 331 for storing and heating a refrigerant (second refrigerant), a pump 333 for circulating the refrigerant, a heat exchanger 335 for providing heat from the refrigerant to the main heating unit 141, and an electronic heating element 337 for transferring heat to the heating tank 331.

In addition, the auxiliary heating unit 143 may be configured to include a refrigerant circulation pipe (second piping) 341 that connects the heating tank 331, the pump 333, and the heat exchanger 335, and a refrigerant (second refrigerant) that flows inside the second piping 341.

The heating tank 331 may be configured with a waste heat exchanger 361 for transferring heat generated from a heat-generating part of the vehicle to the second refrigerant inside. For example, the waste heat exchanger 361 may be connected to at least one heat-generating part, such as a battery 351, wiring, a motor, and a transmission, to transfer the heat generated from the heat-generating part to the second refrigerant in the heating tank 331.

More specifically, heat generated from the battery 351 during charging of the vehicle's battery 351 may be transferred to the second refrigerant inside the heating tank 331 through the waste heat exchanger 361.

Herein, the waste heat exchanger 361 may be configured to include at least some of heat transfer bodies such as a heat pipe, a thermally conductive polymer, a thermal pad, graphene, and thermally conductive rubber.

The pump 333 may generate pressure to cause the second refrigerant stored in the heating tank 331 to flow toward the heat exchanger. Based on this, the second refrigerant from the heating tank 331 may pass through the heat exchanger 335 and the pump 333, and then return to the heating tank 331 to be circulated.

The electronic heating element 337 may include at least one of various electronic elements that generate heat, such as a positive temperature coefficient (PTC) heater, an induction heating device, a thermoelectric heater, an infrared heating device, a ceramic heater, and a resistive heating device such as a nichrome wire or a heating film.

In this case, the electronic heating element 337 may be arranged such that its heating side is in contact with an outer surface of the heating tank 331 or in contact with the refrigerant (the second refrigerant) inside the heating tank 331.

Herein, when the electronic heating element 337 is configured such that its heating side contacts the refrigerant, it may be configured by forming a hole (e.g., drilling) in a part of one surface of the heating tank 331 where the heating side of the electronic heating element 337 is to be placed, and then arranging (or inserting) the heating side of the electronic heating element 337 toward an interior of the heating tank 331 and sealing it.

The electronic heating element 337 generates heat on its heating side based on control from the processor 110, and the generated heat may be transferred to the second refrigerant inside the heating tank 331 to heat the second refrigerant.

According to the description above, the electronic heating element 337 is described as being placed on one surface of the heating tank 331. However, the electronic heating element 337 could also be placed in an outlet pipe of the heating tank 331 or arranged to transfer heat directly to the heat exchanger 335.

Furthermore, the auxiliary heating unit 143 may be configured to include at least one blower fan (not shown) that operates to make the cabin air of the vehicle pass through the heat exchanger 335. Here, the blower fan may be located at a front end (e.g., an air inlet) or a rear end (e.g., an air outlet) of the heat exchanger 335 and configured to control the flow of air passing through the heat exchanger 335.

In addition, the auxiliary heating unit 143 may be configured with a passage (e.g., a duct) such that air inside the vehicle passes through the heat exchanger 335 and is introduced into the vehicle cabin.

However, without being limited thereto, the auxiliary heating unit 143 may be configured with a passage (e.g., a duct) such that air passing through the heat exchanger 335 flows into the heat core 313. In this case, regarding the configuration of the heat exchanger 335 and the heat core 313, air that has passed through the heat exchanger 335 of the auxiliary heating unit 143 may be configured to pass through the heat core 313 of the main heating unit 141 before being introduced into the vehicle cabin.

When the air passage is formed as described above, the heat exchanger 335 and the heat core 313 may be configured together in the same duct. In this case, the heat exchanger 335 and the heat core 313 could also be configured to share a blower fan.

Furthermore, the duct in which the heat exchanger 335 or the heat core 313 is placed may include at least one fluid control device (e.g., a valve, a vane, etc.) for controlling air inflow (or controlling the direction of airflow). Herein, the fluid control device may be controlled by the processor 110.

Based on this, the air from the vehicle cabin may be introduced into the cabin after passing through only the heat core 313, after passing through only the heat exchanger 335, or after passing through both the heat exchanger 335 and the heat core 313 in sequence.

For example, the blower fan that creates airflow through the heat exchanger 335 and the blower fan that creates airflow through the heat core 313 may be the same blower fan, and the path through which the air flows may be configured to be controlled by the fluid control device. However, the blower fans could also be configured independently for the heat exchanger 335 and the heat core 313, respectively.

The processor 110 may control a path for heating the cabin air (e.g., the heat exchanger 335 or the heat core 313) and/or control a volume of cabin air flowing into the heat exchanger 335 or the heat core 313 by controlling the fluid control device and/or the blower fan configured in the duct.

Additionally, the auxiliary heating unit 143 may be configured with at least one second temperature sensor for measuring a temperature of the second refrigerant that flows out from the heating tank 331 or into the heat exchanger 335 through the second piping 341.

More specifically, the second temperature sensor may be attached to a surface of the second piping 341 within a preset distance (second distance) from an outlet of the heating tank 331 or from an inlet of the heat exchanger 335.

However, the second temperature sensor may also be configured by forming a hole (e.g., drilling) in the surface of the second piping 341 within the second distance from the outlet of the heating tank 331 or from the inlet of the heat exchanger 335, and then arranging (or inserting) the second temperature sensor toward an interior of the second piping 341 and sealing it.

A method for controlling the heating of an electric vehicle using the heating unit 140 configured as described above and the HVAC system 100 including the heating unit 140 will now be described in detail below.

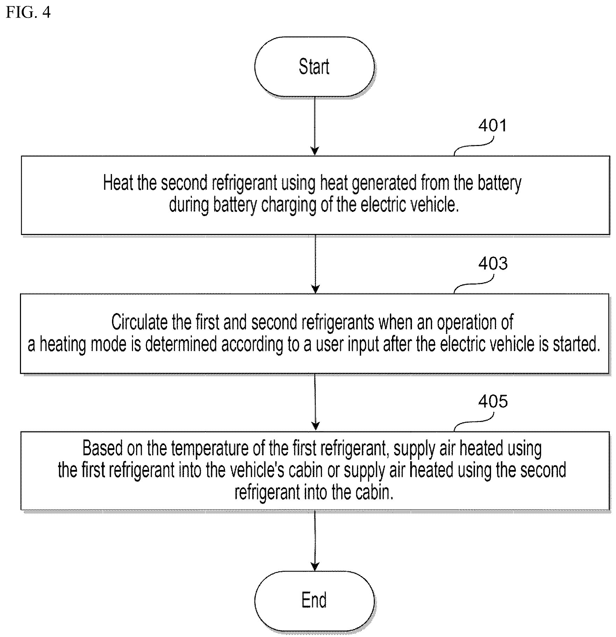

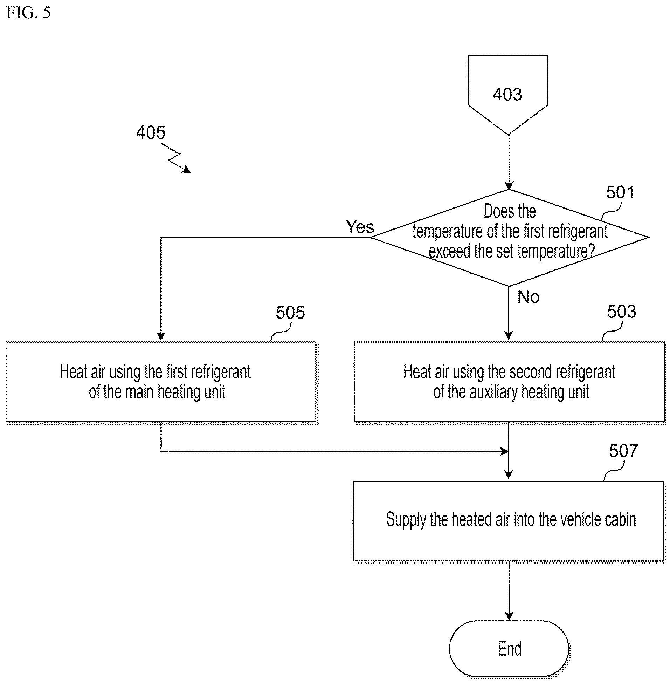

To this end, FIG. 4 is a flowchart illustrating a flow of operations for performing heating control of a vehicle in an HVAC system, according to some non-limiting embodiments of the present disclosure. And, FIG. 5 is a flowchart illustrating a detailed flow of operations for performing heating control of a vehicle in an HVAC system, according to some non-limiting embodiments of the present disclosure.

First, in step 401, the processor 110 may heat the second refrigerant using heat generated from the battery 351 of the vehicle when the battery 351 is being charged.

More specifically, upon detecting that the vehicle's battery 351 is charging (e.g., the start of charging for the battery 351), the processor 110 may control a battery cooling system (not shown) or the waste heat exchanger 361 such that heat generated from the battery 351 during charging is transferred to the second refrigerant stored in the heating tank 331 through the waste heat exchanger 361.

According to an embodiment, the processor 110 may control a heat transfer path of the battery cooling system or the waste heat exchanger 361, allowing the heat generated from the battery 351 to be transferred to the second refrigerant in the heating tank 331.

In step 403, upon determining to operate a heating mode according to a user input after the electric vehicle is started, the processor 110 may circulate the first refrigerant and the second refrigerant.

More specifically, the processor 110 may detect the starting of the vehicle. In this case, the processor 110 may detect the starting of the vehicle in a state where the charging of the battery 351 has been completed or is still in progress.

Additionally, the processor 110 may confirm the setting of a target temperature based on a user input after the vehicle is started. Here, the target temperature may be the desired temperature of the vehicle's cabin (e.g., passenger cabin) to be achieved by operating the HVAC system.

More specifically, the processor 110 may acquire a user input for setting the target temperature through a control panel (not shown) of the HVAC system 100 located in the vehicle cabin.

Herein, when the input target temperature requires the operation of the heating unit 140 of the HVAC system 100 (e.g., when the HVAC system 100 operates in a heating mode), the processor 110 may circulate the first refrigerant of the main heating unit 141 and circulate the second refrigerant of the auxiliary heating unit 143.

For example, the processor 110 may operate the compressor 311 to move the compressed first refrigerant toward the heat core 313. In addition, the processor 110 may operate the pump 333 to move the second refrigerant stored in the heating tank 331 toward the heat exchanger 335.

According to various embodiments, the processor 110 may heat the second refrigerant using the electronic heating element 337 when a temperature of the second refrigerant is equal to or less than a first preset temperature. Here, the first temperature may be a preset temperature in degrees Celsius that is lower than the target temperature.

For example, the first temperature may be set to 23 degrees Celsius (°C). However, the first temperature may be changed according to settings.

Additionally, the first temperature may be calculated by subtracting a preset first-1 temperature from the target temperature. For example, the first-1 temperature may be set to 10°C. In this case, if the target temperature is 32°C, the first temperature may be determined as 22°C, and if the target temperature is 35°C, the first temperature may be determined as 25°C.

As described above, the processor 110 may measure the temperature of the second refrigerant measured by the second temperature sensor at the time the pump 333 is activated or thereafter, and if the measured temperature of the second refrigerant is equal to or less than the first temperature, it may heat the second refrigerant using the electronic heating element 337.

In step 405, based on the temperature of the first refrigerant, the processor 110 may supply air heated using the first refrigerant into the vehicle's cabin or supply air heated using the second refrigerant into the vehicle's cabin.

For example, when heating the vehicle cabin air via the main heating unit 141, the processor 110 may supply the air, which is heated by the first refrigerant by entering and passing through the heat core 313, back into the cabin.

On the other hand, when heating the vehicle cabin air via the auxiliary heating unit 143, the processor 110 may supply the air, which is heated by the second refrigerant by entering and passing through the heat exchanger 335, back into the cabin.

Here, based on the temperature of the first refrigerant, the processor 110 may determine whether to heat the cabin air using the main heating unit 141 or to heat it using the auxiliary heating unit 143.

Referring to FIG. 5 in more detail, in step 501, the processor 110 may determine whether the temperature of the first refrigerant exceeds a set temperature (e.g., a second temperature).

To do this, once the first and second refrigerants are circulating, the processor 110 may measure the temperature of the first refrigerant via the first temperature sensor. Here, the processor 110 may measure the temperature of the first refrigerant at designated time intervals or in real-time.

Here, the second temperature may be set based on the target temperature. More specifically, the second temperature may be set as the target temperature. For example, if the target temperature is set to 28 degrees Celsius (°C), the second temperature may be set to 28°C.

However, without being limited thereto, the second temperature may be set to a temperature at which it is predicted that the air passing through the heat core 313 will be heated to be equal to or greater than (or to exceed) the target temperature.

To this end, a data matching table may be stored in the storage unit 120, wherein the table maps each of a plurality of first refrigerant temperatures to a corresponding air temperature after passing through the heat core 313. Here, the plurality of first refrigerant temperatures may include a plurality of temperatures divided by a preset temperature unit (e.g., 1°C, or 0.5°C, etc.) within a preset temperature range (e.g., in degrees Celsius).

Based on this, the processor 110 may determine, as the second temperature, the temperature of the first refrigerant for which the target temperature is equal to the air temperature after passing through the heat core 313.

Additionally, the second temperature may be determined by further considering the current temperature of the vehicle cabin. To this end, a data matching table may be stored in the storage unit 120, wherein the table maps each combination of a plurality of first refrigerant temperatures and a plurality of vehicle cabin temperatures to a corresponding air temperature after passing through the heat core 313.

Here, the plurality of vehicle cabin temperatures may include a plurality of temperatures divided by a preset temperature unit (e.g., 1°C, or 0.5°C, etc.) within a preset temperature range (e.g., in degrees Celsius).

Based on this, the processor 110 may determine, as the second temperature, the temperature of the first refrigerant for which the target temperature is equal to the air temperature after passing through the heat core 313.

The HVAC system 100, as described above, may be further configured to include at least one third temperature sensor for measuring the temperature of the vehicle cabin. Herein, the third temperature sensor may be in at least one area, including a driver's seat area and a passenger's seat area, within the vehicle cabin. The third temperature sensor may be installed on at least a part of a seat, a vehicle frame, a dashboard, a floor, and a ceiling.

The processor 110 may perform step 503 if the measured temperature of the first refrigerant is equal to or less than the second temperature, and perform step 505 if it exceeds the second temperature.

First, to describe step 503, the processor 110 may heat air via the heat exchanger 335 of the auxiliary heating unit 143.

More specifically, the processor 110 may introduce cabin air of the vehicle into the heat exchanger 335 of the auxiliary heating unit 143, and may heat the air based on heat exchange between the second refrigerant flowing in the heat exchanger 335 and the air passing through the heat exchanger 335.

On the other hand, in step 505, the processor 110 may heat air via the heat core 313 of the main heating unit 141.

More specifically, the processor 110 may introduce cabin air of the vehicle into the heat core 313 of the main heating unit 141 and may heat the air based on heat exchange between the first refrigerant flowing in the heat core 313 and the air passing through the heat core 313.

After performing step 503 or step 505, the processor 110 may perform step 507. In step 507, the processor 110 may supply the air heated based on the first refrigerant or the second refrigerant into the vehicle's cabin, as described above.

After performing step 507 (or step 405), the processor 110 may end the embodiment of FIG. 5 (or FIG. 4).

Although the above description states that the processor 110 ends the embodiment of FIG. 4 after performing the operation of step 507, the operation of step 405 may be repeatedly performed. For example, after performing the operation of step 507, the processor 110 may perform the operation of step 501 again.

According to this, when the target temperature of the heating mode is set after the vehicle is started, the processor 110 may perform cabin heating using the second refrigerant of the auxiliary heating unit 143, which has been heated using waste heat generated during battery 351 charging, before the temperature of the first refrigerant of the main heating unit 141 is sufficiently heated to perform cabin heating.

The above description explains that the processor 110 performs cabin heating using the main heating unit 141 or the auxiliary heating unit 143. However, as illustrated in FIGS. 2 and 3, the processor 110 could also supply air into the vehicle cabin after passing it through the heat exchanger 335 of the auxiliary heating unit 143 and then through the heat core 313 of the main heating unit 141.

More specifically, when the temperature of the first refrigerant exceeds the second temperature and the difference between the cabin temperature measured via the third temperature sensor and the target temperature exceeds a preset temperature difference, the processor 110 may rapidly heat the vehicle cabin air by first passing it through the heat exchanger 335 of the auxiliary heating unit 143 for primary heating, and then passing it through the heat core 313 of the main heating unit 141 for secondary heating.

Here, referring to FIG. 3, the air movement direction 30 is shown as passing through the heat exchanger 335 and then the heat core 313 before being supplied into the vehicle cabin. However, based on FIG. 2 and the description above, it will be apparent that the air movement direction 30 may be to be supplied into the vehicle's cabin after passing through the heat exchanger 335, and/or to be supplied into the vehicle's cabin after passing through the heat core 313.

By supplying the air heated via the main heating unit 141 and the auxiliary heating unit 143 into the vehicle's cabin, the processor 110 may allow the vehicle cabin temperature to effectively reach the target temperature.

In describing various embodiments, the first refrigerant or the second refrigerant may include at least one refrigerant from among various refrigerants such as a natural refrigerant, a hydrofluorocarbon (HFC)-based refrigerant which, preferably, is a saturated hydrofluorocarbon (HFC)-based refrigerant, a hydrofluoroolefin (HFO)-based refrigerant, a hydrochlorofluorocarbon (HCFC)-based refrigerant, a hydrocarbon-based refrigerant that is not a natural refrigerant, a halon or a perfluorocarbon (PFC)-based refrigerant, and the like. These may be used alone or in a combination of two or more.

Here, the natural refrigerant may include methane (R-50), ammonia (R-717), carbon dioxide (R-744), ethane (R-170), propane (R-290), and the like.

The hydrofluorocarbon (HFC)-based refrigerant preferably is a saturated hydrofluorocarbon (HFC)-based refrigerant and preferably may include difluoromethane (R-32), 1,1-difluoroethane (R-152a), pentafluoroethane (R-125), 1,1,1,2-tetrafluoroethane (R-134a), 1,1,1-trifluoroethane (R-143a), trifluoromethane (R-23), fluoroethane (R-161), 1,1,1,2,3,3,3-heptafluoropropane (R-227ea), 1,1,1,2,3,3-hexafluoropropane (R-236ea), 1,1,1,3,3,3-hexafluoropropane (R-236fa), 1,1,1,3,3-pentafluoropropane (R-245fa), 1,1,1,3,3-pentafluorobutane (R-365mfc), and the like.

The hydrofluoroolefin (HFO)-based refrigerant may include 1,1,2-trifluoroethylene (R-1123), 1-chloro-2,3,3,3-tetrafluoropropene (R1224yd(Z)), 2,3,3,3-tetrafluoropropene (R-1234yf), 1,3,3,3-tetrafluoropropene (R-1234ze), 1,2,3,3-tetrafluoropropene (R-1234ye), 3,3,3-trifluoropropene (R-1243zf), 1,1-difluoroethylene (R-1132a), 1,2,3,3,3-pentafluoropropene (R-1225ye), and the like.

The hydrochlorofluorocarbon (HCFC)-based refrigerant may include chlorodifluoromethane (R-22), chlorotetrafluoroethane (R-124), 1-chloro-1,1-difluoroethane (R-142b), and the like.

The hydrocarbon-based refrigerant that is not a natural refrigerant may include propylene (R-1270), isobutane (R-600a), dimethyl ether, isopentane, pentane, and the like.

The halon or perfluorocarbon (PFC)-based refrigerant may include trifluoroiodomethane (R-13I1), octafluoropropane (R-218), octafluorocyclobutane (RC318), and the like.

Herein, the first refrigerant and the second refrigerant may be the same or different. In addition, the first refrigerant and the second refrigerant may include at least in part a refrigerant of the same composition.

Furthermore, the inner diameters of the first piping, in which the first refrigerant flows, and the second piping, in which the second refrigerant flows, may be the same or different.

As described above, according to various embodiments, by utilizing waste heat generated during battery charging for cabin heating through the heating control method and the HVAC system thereof, vehicle heating can be performed without consuming additional energy (e.g., battery power) at the initial start-up of the vehicle, thereby improving the vehicle's energy efficiency.

According to various embodiments, by utilizing the waste heat generated during battery charging for cabin heating through the heating control method and the HVAC system thereof, the vehicle cabin can be heated quickly, and therefore, a comfortable environment can be provided to passengers in a shorter amount of time.

Although the embodiments have been described with reference to a limited number of drawings, those skilled in the art will be able to apply various technical modifications and variations based on the various embodiments.

For example, appropriate results may be achieved even if the described technologies are performed in a different order from the described method, or if the components of the described system, structure, device, circuit, etc., are combined or joined in a different form from the described method, or are replaced or substituted by other components or equivalents.

Therefore, other implementations, other embodiments, and equivalents to the claims are intended to be included within the scope of the following claims.

## Claims

1. A method for controlling heating of a heating, ventilation, and air conditioning (HVAC) system (100) for an electric vehicle,
wherein the HVAC system (100) comprises a main heating unit (141) in which a first refrigerant circulates and an auxiliary heating unit (143) in which a second refrigerant circulates, and
wherein at least one of the first refrigerant and the second refrigerant comprises at least one selected from the group consisting of:
a natural refrigerant;
a hydrofluorocarbon (HFC)-based refrigerant;
a hydrofluoroolefin (HFO)-based refrigerant;
a hydrochlorofluorocarbon (HCFC)-based refrigerant;
a hydrocarbon-based refrigerant that is not a natural refrigerant; and
a halon or a perfluorocarbon (PFC)-based refrigerant.

2. The method of claim 1, wherein the natural refrigerant comprises at least one selected from the group consisting of:
methane (R-50), ammonia (R-717), carbon dioxide (R-744), ethane (R-170), and propane (R-290);
wherein the hydrofluorocarbon (HFC)-based refrigerant is a saturated hydrofluorocarbon (HFC)-based refrigerant and preferably comprises at least one selected from the group consisting of:
difluoromethane (R-32), 1,1-difluoroethane (R-152a), pentafluoroethane (R-125), 1,1,1,2-tetrafluoroethane (R-134a), 1,1,1-trifluoroethane (R-143a), trifluoromethane (R-23), fluoroethane (R-161), 1,1,1,2,3,3,3-heptafluoropropane (R-227ea), 1,1,1,2,3,3-hexafluoropropane (R-236ea), 1,1,1,3,3,3-hexafluoropropane (R-236fa), 1,1,1,3,3-pentafluoropropane (R-245fa), and 1,1,1,3,3-pentafluorobutane (R-365mfc);
wherein the hydrofluoroolefin (HFO)-based refrigerant comprises at least one selected from the group consisting of:
1,1,2-trifluoroethylene (R-1123), 1-chloro-2,3,3,3-tetrafluoropropene (R1224yd(Z)), 2,3,3,3-tetrafluoropropene (R-1234yf), 1,3,3,3-tetrafluoropropene (R-1234ze), 1,2,3,3-tetrafluoropropene (R-1234ye), 3,3,3-trifluoropropene (R-1243zf), 1,1-difluoroethylene (R-1132a), and 1,2,3,3,3-pentafluoropropene (R-1225ye);
wherein the hydrochlorofluorocarbon (HCFC)-based refrigerant comprises at least one selected from the group consisting of:
chlorodifluoromethane (R-22), chlorotetrafluoroethane (R-124), and 1-chloro-1,1-difluoroethane (R-142b);
wherein the hydrocarbon-based refrigerant that is not a natural refrigerant comprises at least one selected from the group consisting of:
propylene (R-1270), isobutane (R-600a), dimethyl ether, isopentane, and pentane;
and/or
wherein the halon or the perfluorocarbon (PFC)-based refrigerant comprises at least one selected from the group consisting of:
trifluoroiodomethane (R-13I1), octafluoropropane (R-218), and octafluorocyclobutane (RC318).

3. The method of claim 1 or 2, comprising:
heating the second refrigerant using heat generated from a battery (351) of the electric vehicle during charging of the battery (351);
circulating the first refrigerant and the second refrigerant when an operation of a heating mode is determined according to a user input after the electric vehicle is started; and
based on a temperature of the first refrigerant, supplying, into a cabin of the electric vehicle, air heated using the first refrigerant or supplying, into the cabin of the electric vehicle, air heated using the second refrigerant.

4. The method of claim 3, wherein the operation of circulating of the first refrigerant and the second refrigerant further comprises:
heating the second refrigerant using an electronic heating element (337) when a temperature of the second refrigerant is equal to or less than a first preset temperature.

5. The method of claim 3 or 4, wherein the operation of supplying, into a cabin of the electric vehicle, one of air heated using the first refrigerant and air heated using the second refrigerant comprises:
when a temperature of the first refrigerant is equal to or less than a second temperature, supplying, into the cabin, air that has passed through a heat exchanger (335) of the auxiliary heating unit (143); or
when the temperature of the first refrigerant is greater than the second temperature, stopping an operation of the auxiliary heating unit (143) and supplying, into the cabin, air that has passed through a heat core (313) of the main heating unit (141).

6. An HVAC system (100) for controlling heating for an electric vehicle, the HVAC system (100) comprising:
a main heating unit (141) in which a first refrigerant circulates; and
an auxiliary heating unit (143) in which a second refrigerant circulates,
wherein the main heating unit (141) comprises:
a compressor (311) configured to compress the first refrigerant;
a heat core (313) configured to exchange heat with the first refrigerant; and
a first piping (321) configured to circulate the first refrigerant through the compressor (311) and the heat core (313),
wherein the auxiliary heating unit (143) comprises:
a heating tank (331) configured to store the second refrigerant;
a pump configured to move the second refrigerant;
a heat exchanger (335) configured to exchange heat with the second refrigerant; and
a second piping (341) configured to circulate the second refrigerant through the heating tank (331), the pump, and the heat exchanger (335), and
wherein at least one of the first refrigerant and the second refrigerant comprises at least one selected from the group consisting of:
a natural refrigerant;
a hydrofluorocarbon (HFC)-based refrigerant;
a hydrofluoroolefin (HFO)-based refrigerant;
a hydrochlorofluorocarbon (HCFC)-based refrigerant;
a hydrocarbon-based refrigerant that is not a natural refrigerant; and
a halon or a perfluorocarbon (PFC)-based refrigerant.

7. The HVAC system (100) of claim 6, wherein the natural refrigerant comprises at least one selected from the group consisting of:
methane (R-50), ammonia (R-717), carbon dioxide (R-744), ethane (R-170), and propane (R-290);
wherein the hydrofluorocarbon (HFC)-based refrigerant is a saturated hydrofluorocarbon (HFC)-based refrigerant and preferably comprises at least one selected from the group consisting of:
difluoromethane (R-32), 1,1-difluoroethane (R-152a), pentafluoroethane (R-125), 1,1,1,2-tetrafluoroethane (R-134a), 1,1,1-trifluoroethane (R-143a), trifluoromethane (R-23), fluoroethane (R-161), 1,1,1,2,3,3,3-heptafluoropropane (R-227ea), 1,1,1,2,3,3-hexafluoropropane (R-236ea), 1,1,1,3,3,3-hexafluoropropane (R-236fa), 1,1,1,3,3-pentafluoropropane (R-245fa), and 1,1,1,3,3-pentafluorobutane (R-365mfc);
wherein the hydrofluoroolefin (HFO)-based refrigerant comprises at least one selected from the group consisting of:
1,1,2-trifluoroethylene (R-1123), 1-chloro-2,3,3,3-tetrafluoropropene (R1224yd(Z)), 2,3,3,3-tetrafluoropropene (R-1234yf), 1,3,3,3-tetrafluoropropene (R-1234ze), 1,2,3,3-tetrafluoropropene (R-1234ye), 3,3,3-trifluoropropene (R-1243zf), 1,1-difluoroethylene (R-1132a), and 1,2,3,3,3-pentafluoropropene (R-1225ye);
wherein the hydrochlorofluorocarbon (HCFC)-based refrigerant comprises at least one selected from the group consisting of:
chlorodifluoromethane (R-22), chlorotetrafluoroethane (R-124), and 1-chloro-1,1-difluoroethane (R-142b);
wherein the hydrocarbon-based refrigerant that is not a natural refrigerant comprises at least one selected from the group consisting of:
propylene (R-1270), isobutane (R-600a), dimethyl ether, isopentane, and pentane;
and/or
wherein the halon or the perfluorocarbon (PFC)-based refrigerant comprises at least one selected from the group consisting of:
trifluoroiodomethane (R-13I1), octafluoropropane (R-218), and octafluorocyclobutane (RC318).

8. The HVAC system (100) of claim 6 or 7, further comprising:
a battery (351);
a waste heat exchanger (361) configured to transfer heat between the battery (351) and the heating tank (331); and
a processor (110) configured to:
heat the second refrigerant using heat generated from the battery (351) during charging of the battery (351);
circulate the first refrigerant and the second refrigerant when an operation of a heating mode is determined according to a user input after the electric vehicle is started; and
based on a temperature of the first refrigerant, control the HVAC system (100) to supply, into a cabin of the electric vehicle, air heated using the first refrigerant or to supply, into the cabin of the electric vehicle, air heated using the second refrigerant.

9. The HVAC system (100) of claim 8, wherein the processor (110) is further configured to:
heat the second refrigerant using an electronic heating element (337) when a temperature of the second refrigerant is equal to or less than a first preset temperature.

10. The HVAC system (100) of claim 8 or 9, wherein the processor (110) is further configured to:
when a temperature of the first refrigerant is equal to or less than a second temperature, supply, into the cabin, air that has passed through a heat exchanger (335) of the auxiliary heating unit (143), or
when the temperature of the first refrigerant is greater than the second temperature, stop an operation of the auxiliary heating unit (143) and supply, into the cabin, air that has passed through a heat core (313) of the main heating unit (141).

11. Use of a HVAC system (100) as defined in any one of claims 6 to 10 in an electric vehicle.

12. An electric vehicle, comprising the HVAC system (100) as defined in any one of claims 6 to 10.
